# EUROPEAN PATENT APPLICATION

(11) **EP 1 158 782 A2**
(43) Date of publication of application: **28.11.2001**
(21) Application number: 01303587.8
(22) Date of filing: 19.04.2001
(51) Int. Cl.: H04N 5/00

(54) **Recording schedule reservation system**

(30) Priority: 20.04.2000 JP 2000119842
(71) Applicant: SONY CORPORATION, Tokyo 141 (JP)
(72) Inventor: Hanai, Tomoyuki, c/o IPD Sony Corporation, Tokyo 141 (JP); Miki, Nanami, c/o IPD Sony Corporation, Tokyo 141 (JP)
(74) Representative: Horner, David Richard

(57) **Abstract**

There is disclosed a recording schedule reservation system for reserving a recording schedule of a broadcasting program through a network with an enhanced operating capability by enabling recording of a broadcasting program to be scheduled for a video recording/reproducing apparatus such as a home video recorder by utilizing an externally portable telephone or the like, and the system comprises: a program information server connected to a network, having broadcasting program information and client's information; a video recording/reproducing apparatus having a function to access the program information server to reserve a recording schedule of a predetermined program; and a information terminal apparatus which accesses the program information server to browse broadcasting program information and is capable of selecting any desired broadcasting program, in which the program information server enables the video recording/reproducing apparatus to reserve the recording schedule of the selected broadcasting program selected by the data communicating terminal apparatus.

## Description

### BACKGROUND OF THE INVENTION

### 1. Field of the Invention:

The present invention relates to a recording schedule reservation system.

### 2. Description of the Related Art:

When recording any desired broadcasting program by applying a video recording/reproducing apparatus based on a conventional art such as a video recorder, for example, it has been a conventional practice to effect reservation of a recording schedule by way of operating a remote controller. Based on this recording schedule, the video recorder with a preset recording schedule records a received broadcasting program on a recording medium when a scheduled time is reached.

Further, it is also possible to browse broadcasting program information by way of accessing an electronic program guide (EPG) server when setting a recording schedule to select a desired broadcasting program among browsed program information.

Nevertheless, the above method still has a technical problem to solve. More particularly, when utilizing such a device for providing information on a network, for example, after accessing an EPG server, it is still impossible to reserve a recording schedule of any desired broadcasting program on such a video recording/reproducing apparatus intended for the recording schedule reservation from a different external device. Further, it is neither possible to effect the recording schedule reservation of any desired broadcasting program from a portable information communication terminal apparatus such as a portable telephone, for example, nor possible to confirm actual recording schedule of a video recording/reproducing apparatus from a remote location. Further, the above method still fails to accumulate program information corresponding to the reserved recording schedule.

Accordingly, such a conventional art as the one cited above not only obliges a video recording/reproducing apparatus to secure reservation of a recording schedule via operation of an external information communication apparatus, but it also necessitates accumulation of information of the recording condition and information of recorded programs as technical problems remaining to be solved.

### SUMMARY OF THE INVENTION

According to one aspect of the present invention there is provided a recording schedule reservation system for programming a recording schedule of a broadcast program through a network comprising;
a program information server connected to a network, having broadcast program information and client information accumulated therein;
a video recording/reproducing apparatus connected to the network for accessing the program information server to reserve a recording schedule of a broadcast program; and
an information terminal apparatus for accessing the program information server to read the broadcast program information so as to select a desired broadcasting program, wherein:
the program information server delivers recording schedule reservation of the selected broadcast program in the video recording/reproducing apparatus.

In the recording schedule reservation system of one embodiment, the above-referred information terminal apparatus is a portable-type information terminal apparatus.

In the recording schedule reservation system of one embodiment, the above-referred portable-type information terminal apparatus is a portable-type telephone.

In the recording schedule reservation system of one embodiment, the above-referred broadcasting program information includes: a channel number and/or starting time of a broadcasting program and/or ending time of the broadcasting program and/or actual duration of the broadcasting program and/or video recording mode and/or a title of the broadcasting program.

In the recording schedule reservation system of one embodiment, the above-referred information terminal apparatus capable of accessing the above-referred program information server enables the program information server to execute authentication of individuals.

In the recording schedule reservation system of one embodiment, the above-referred program information server to be accessed by the above-referred information terminal apparatus executes individual authentication and charges individuals for payment of service fee.

In the recording schedule reservation system of one embodiment, the above-referred video recording/reproducing apparatus programs a recording schedule based on the recording schedule reservation delivered by the above-referred program information server.

In the recording schedule reservation system of one embodiment, the above-referred program information server comprises an information/control server to be accessed by the information terminal and a broadcasting program server to be accessed by the video recording/reproducing apparatus, wherein the information/control server and the broadcasting program server discretely operate themselves on the network.

In the recording schedule reservation system of one embodiment, the above-referred broadcasting program server is an electronic program guide (EPG) server.

In the recording schedule reservation system of one embodiment, the above-referred information/control server accumulates broadcasting program information scheduled by the above-referred information terminal apparatus, and the information terminal apparatus is capable of checking the recording schedule from broadcasting program information accumulated in the information/control server.

In the recording schedule reservation system of one embodiment, if a recording schedule for a broadcasting program is erroneously input, then, the above-referred information/control server responds to the above information terminal apparatus by way of informing the information terminal apparatus of the erroneously established recording schedule of the broadcasting program.

In the recording schedule reservation system of one embodiment, the above-referred information terminal apparatus is capable of checking a recorded broadcasting program from the broadcasting program information accumulated in the above-referred information/control server.

In the recording schedule reservation system of one embodiment, when the information terminal apparatus selects the broadcasting program by accessing the information/control server, the information/control server accesses the broadcasting program server to set the recording schedule of the selected broadcasting program; when the recording schedule of the selected broadcasting program is set, the broadcasting program server transmits the broadcasting program information set by the information/control server to the video recording/reproducing apparatus; and when the video recording/reproducing apparatus receives the broadcasting program, the video recording/reproducing apparatus reserves the recording schedule of the selected broadcasting program.

In the recording schedule reservation system of one embodiment, whenever an improvement and/or any change is effected for broadcasting program information service in the above-referred program information server, an exactly identical improvement and/or change is applied to the above-referred information communicating terminal apparatus and the above-referred video recording/reproducing apparatus via the network.

As was described above, by way of operating a portable-type telephone which functions as an information terminal apparatus, for example, a user accesses a program information server on the Internet to specify a broadcasting program that should be scheduled to be recorded, and then, the specified broadcasting program is transmitted to a video recording/reproducing apparatus connected to a network via the program information server. Because of this arrangement, it is possible for the video recording/reproducing apparatus to reserve a schedule of video recording via external reserving operation, and yet, it is also possible to schedule the recording of a desired broadcasting program by way of utilizing information service provided by a portable-type telephone.

As is clear from the above description, the recording schedule reservation system enables a user to browse a broadcasting program table by utilizing a portable-type telephone
which is an example of an information terminal apparatus. When the user schedules a recording of an optional broadcasting program via a display screen of the portable-type telephone, it enables a remotely located video recording/reproducing apparatus to reserve a recording schedule of the designated program, whereby enabling the user to secure the recording schedule of the desired broadcasting program from an external location, thus improving operating performance for securing recording schedule of the desired broadcasting program.

Embodiments of the present invention relate to a recording schedule reservation system for reserving a recording schedule through a network. More particularly, embodiments of the present invention relate to such a recording schedule reservation system capable of externally implementing recording schedule reservation via a network.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
FIG. 1 is an overall schematic block diagram of the construction of the recording schedule reservation system for reserving a recording schedule through a network, embodying the present invention;
FIG. 2 is an overall schematic block diagram designating structural components of a portable-type telephone functioning as an information terminal apparatus used in embodiments of the present invention;
FIG. 3 is an explanatory view of display contents of a portable-type telephone set functioning as a portable information terminal apparatus; and
FIG. 4 is a schematic block diagram of structural components of a video recording/reproducing apparatus used in embodiments of the present invention.

### DESCRIPTION OF THE PREFERRED EMBODIMENTS

Referring to the accompanying drawings, embodiments of the present invention are described below.

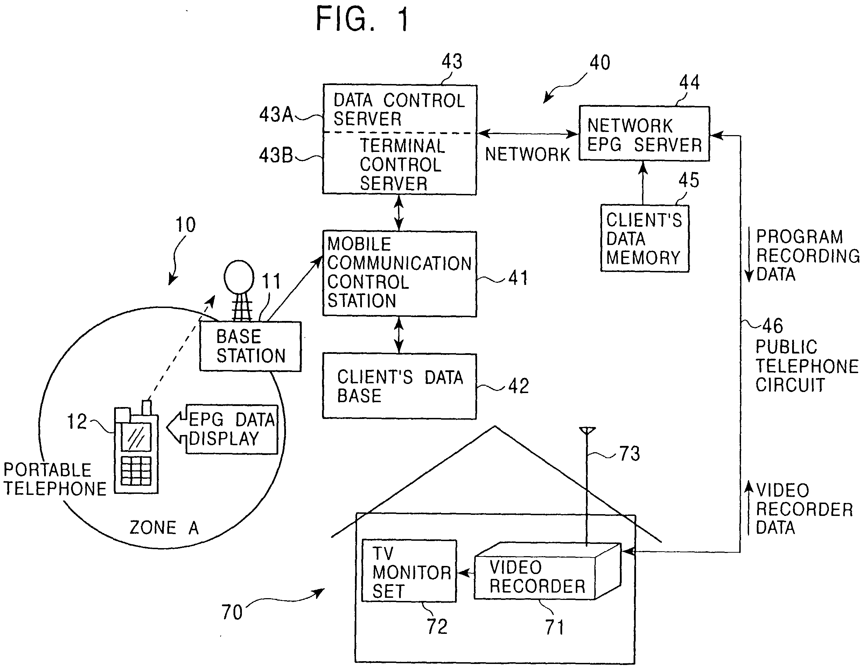

As shown in FIG. 1, the recording schedule reservation system for reserving a recording schedule through a network embodying the present invention comprises the following: a transmitting party 10 comprising a portable telephone 12 functioning itself as a information terminal apparatus located in zone A of a base station 11; a server party 40 which transmits and receives information of the transmitting party 10 via a network; and a client party 70 which is capable of receiving broadcasting program information the recording schedule of which is set from the server party 40. The broadcasting program information comprises a channel number, starting time of individual broadcasting programs, ending time of individual broadcasting programs, actual duration of individual broadcasting programs, video recording mode, and titles of programs. The information related to the broadcasting programs may be changed as required.

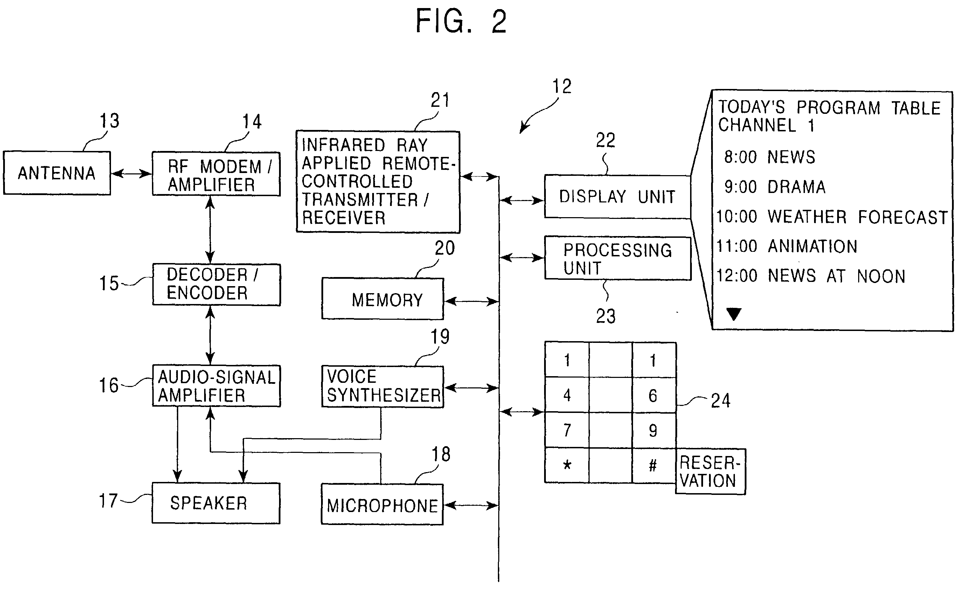

The transmitting party 10 comprises the following: the portable telephone 12 which is capable of displaying broadcasting program information located in the zone A of the base station 11 such as electronic program guide (EPG) information, for example, and the base station 11 which receives or transmits broadcasting program information via operation of the portable telephone 12. As shown in FIG. 2, the portable telephone 12 functioning itself as an information terminal apparatus incorporates so-called remote-controlling function. The portable telephone 12 comprises the following: an RF modem/amplifier 14 which modulates, demodulates, and amplifies audio signals received via an antenna 13; an encoder/decoder 15 which encodes amplified audio signal and then transmits encoded signal to the RF modem/amplifier 14 or decodes audio signal from the RF modem/amplifier 14; an audio-signal amplifier 16 which amplifies audio signal; a speaker unit 17 which generates audio signals; a microphone 18 which inputs voice; a voice synthesizer 19 which generates synthesized voice; a memory 20; an infrared ray applied remote-controlled transmitter/receiver 21; a display unit 22 for displaying menu or the like; a processing unit 23 which executes a variety of arithmetic operations via bus lines; and ten-keys (numerical keys)/reservation key 24; wherein the above components are respectively linked with each other via bus lines and subject to the control of the processing unit 23.

While operating the portable telephone 12 having a structure comprising the above-referred components, an audio signal on the way of receiving telephone voice is initially demodulated into corresponding audio signal by the above-referred RF modem/amplifier 14 and the encoder/decoder 15, and then, the demodulated audio signal is amplified by the audio signal amplifier 16 before being output from the speaker unit 17 as the audio signal. On the other hand, the audio signal input via the microphone 18 is converted into an RF signal by the encoder/decoder 15 and the RF modem/amplifier 14 before being output via the antenna 13. When making a phone call, initially, a corresponding telephone number is input via the numerical key/reservation key 24 to effect transmission to the base station 11 of the portable telephone 12, and then connected to a public telephone circuit 46 via the above-referred server party 40. An electronic program guide (EPG) is displayed on the display unit 22. User selects optional programs by operating cursor, and then transmits a scheduling command by way of depressing the video recording scheduling key. It is also allowable to utilize asterisk * key to set a recording schedule, for example.

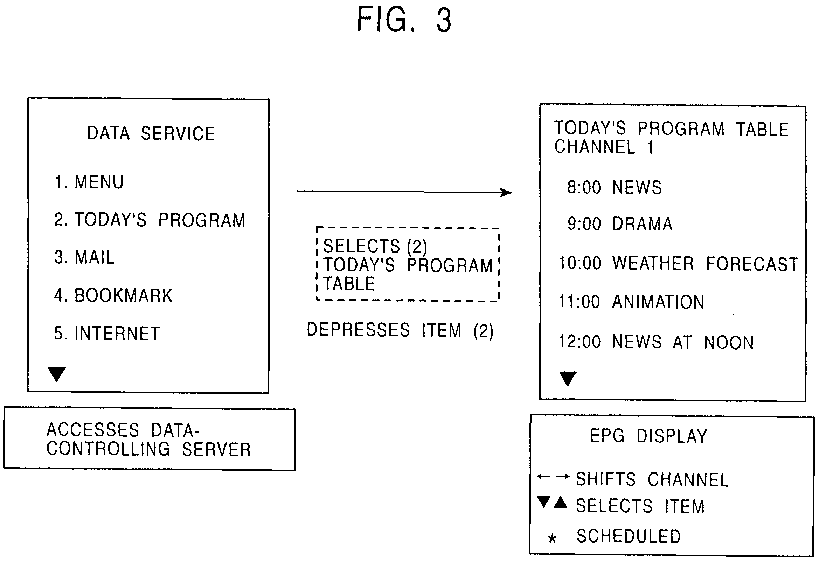

FIG. 3 exemplifies an information service menu display and a program table of the above portable telephone 12. For example, the information service menu display comprises: "1: Menu, 2: Today's program table, 3: Mail, 4: Bookmark, 5: Internet". Assume that a user selects "2: Today's program table" by depressing the numerical key 2, then, Today's program table of channel-1 is displayed. For example, Today's program table serially displays the following: "8:00 News; 9:00 Drama; 10:00 Weather forecast; 11:00 Animation; 12:00 News at Noon". After selecting any desired item among the program table contents, a recording schedule is secured by way of depressing the asterisk * key, for example.

Refer to FIG. 1 once again. The above-referred server party 40 comprises the following: a mobile communication control station 41 linked with the base station 11; a client's data base 42 incorporating a home memory storing client's data accessible from the mobile communication control station 41; an information controlling server 43A and a terminal controlling server 43B accessible from the mobile communication control station 41; and a network EPG server 44 accessible from the information controlling server 43A and the terminal controlling server 43B and via the Internet. The EPG server 44 incorporates such a function capable of externally delivering program recording information via the public telephone circuit 46. The information controlling server 43A and the terminal controlling server 43B jointly constitute an information/control server 43. The EPG server 44 itself is the broadcasting program server. The information/control server 43 and the broadcasting program server (i.e., the EPG server 44) jointly constitute a program information server, where the information/control server 43 and the program information server (i.e., the EPG server 44) individually perform discrete operation. The EPG server 44 incorporates a client's information unit 45 in which individual telephone numbers of clients (users) are registered.

Further, it is so arranged that the information/control server 43 constituting the program information server executes individual authentication against individual access of an information terminal apparatus (i.e., the portable telephone set 12), and yet, the information/control server 43 charges individual clients for the payment of fee imposed on the individual authentication and rendered services. Act of individual authentication and charging of service fee may be utilized as part of information service proper to portable telephone. Whenever executing individual authentication and charging of service fee, it is allowable to exchange communication between mutual apparatuses after fully ciphering the contents of communication.

Further, the information/control server 43 incorporates such a function to store all the broadcasting program information reserved by information terminal apparatuses (i.e., portable telephones 12). It is so arranged that an individual information terminal apparatus (i.e., an individual portable telephone 12) can confirm a recording schedule from the stored broadcasting program information. Further, it is so arranged that, if an error ever occurs in the course of reservation of a recording schedule, in response, the above information/control server 43 informs the corresponding information terminal apparatus (i.e., the portable telephone set 12) of the occurrence of the erroneous recording schedule of a broadcasting program so that fail-proof recording schedule can be secured. Broadcasting program information accumulated in the information/control server 43 is utilized to check and confirm whether the scheduled program has actually been recorded or not, later on. Further, by way of properly controlling information related to the recording schedule, it is possible to cancel the recording schedule, check the actual status of the recording schedule, and accumulate information of scheduled programs, and thus, despite of remotely effected schedule of video recording, it is possible to accurately grasp actual status of the recording schedule.

It is so arranged that, if an improvement or any change has been applied to the contents of broadcasting program information service on the part of the program information server comprising the information/control server 43 and the EPG server 44, exactly identical improvement or change is applied to the information terminal apparatus (i.e., the portable telephone set 12) and the video recording/reproducing apparatus 71 via the corresponding network. Concretely, improvement or change of the contents of broadcasting program information service is effected against the portable telephone 12 by causing the information/control server 43 to down-load specific data. The same applies to the video recording/reproducing apparatus 71 by causing the EPG server 44 to download specific data via the public telephone circuit 46. It is also allowable to exchange individual authentication between the video recording/reproducing apparatus 71 and the EPG server 44 before executing a fully ciphered information communication. Setting of requirements to the video recording/reproducing apparatus such as designation of addresses of the communicating addressees and authentication procedures is executed by utilizing display screen. Setting of requirements to the portable telephone 12 and to the EPG server 44 is executed by utilizing display screen of the portable telephone 12.

Refer to FIG. 1 once again. The receiving party 70 comprises such a conventional video recording/reproducing apparatus 71 and a television receiver 72 normally installed in a household. The video recording/reproducing apparatus 71 is linked with a broadcasting-wave receiving antenna 73. The video recording/reproducing apparatus 71 also incorporates such a function to receive and browse broadcasting program information (EPG information) transmitted from the program information server, i.e., the EPG server 44 as well as a function to be connected to the public telephone circuit 46.

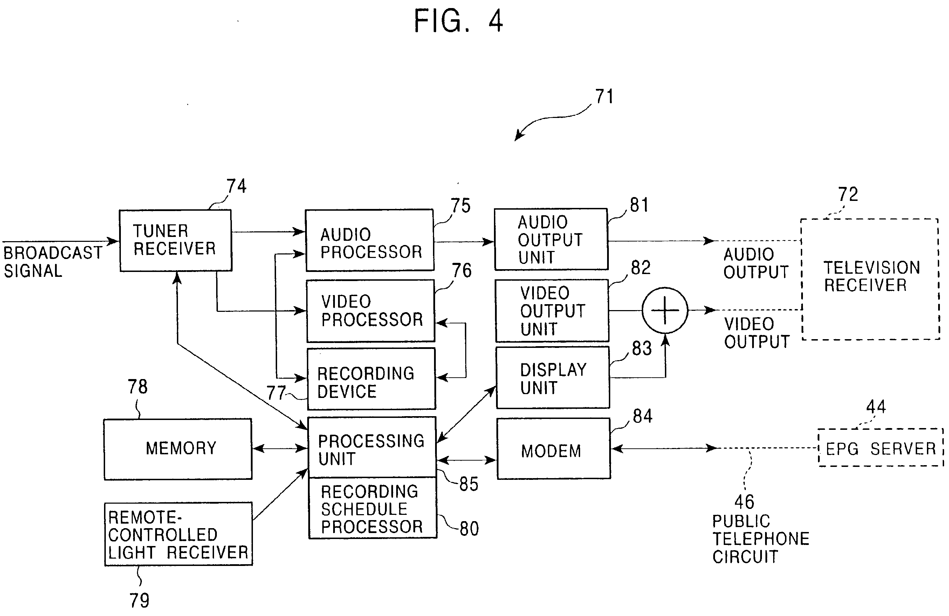

As shown in FIG. 4, the video recording/reproducing apparatus 71 comprises the following: a tuner receiver 74 for receiving a broadcast signal; an audio processor 75 for decoding an audio signal received by the tuner receiver 74; a video processor 76 for decoding a video signal received by the tuner receiver 74; a recording device 77 for recording received and decoded broadcasting program; a memory 78 for recording broadcasting program information and recording schedule setting information; a remote-controlled light-receiver 79 for executing remotely controlled key operation; a recording schedule processor 80 for processing scheduled broadcasting program; an audio output unit 81 which outputs an audio signal decoded by the audio processor 75; a video output unit 82 which outputs a video signal decoded by the video processor 76; a display unit 83 which causes characters and symbols to be displayed on the TV monitor screen by way of superposition; a modem 84 connected to the external public telephone circuit 46; and a processing unit 85 which integrally controls the tuner receiver 74, the memory 78, the remote-controlled light receiver 79, the display unit 83, and the modem 84.

While operating the video recording/reproducing apparatus 71 comprising the above-referred components, in the course of performing video recording, the tuner receiver 74 receives a broadcasting program of a specific broadcasting station selected by the processing unit 85 to cause an audio signal and a video signal to be transmitted discretely to the audio processor 75 and the video processor 76, and then, the decoded audio signal and video signal are respectively recorded by the recording device 77. When the reproduction mode is entered, the audio and video signals are respectively read out from the recording device 77, which are then encoded by the audio processor 75 and the video processor 76. The encoded audio and video signals are then output to the TV monitor set 72 from the audio output processor 81 and the video output processor 82. Broadcasting program information is delivered from the network-EPG server 44 to the video recording/reproducing apparatus 71 via the modem 84 by the public telephone circuit 46. After completing processing via the modem 84, broadcasting program information is processed by the processing unit 85 as the program information. Although the program information is provisionally stored in the memory 78, the program information is controlled by the recording schedule processor 80, and then, when a predetermined time is reached, the tuner receiver 74 receives signals output from a predetermined channel of a corresponding broadcasting station. The received signals are then treated with a process for recording into the recording device 77. The display unit 83 displays operating modes of the video recording/reproducing apparatus 71 by way of superposition. Further, in order to directly control the video recording/reproducing apparatus 71, based on the signal input from the remote-controlled light receiver 79, the processing unit 85 executes specific control operations.

In the recording schedule reservation system comprising the above-referred structural components and function, as shown in FIG. 1, normally, the portable telephone 12 functioning itself as a information terminal apparatus communicates itself with the base station 11 within the corresponding zone A. As a result, the corresponding zone A is automatically registered in the client's data base 42. The portable telephone 12 is connected to a network, i.e., the Internet in the embodiment, by the information/control server 43, and then accesses the program information server (i.e., the EPG server 44). After being connected to the EPG server 44, it is possible to browse broadcasting program via the portable telephone 12.

Using the portable telephone 12, it is possible for user to select any broadcasting program desired for recording from the broadcasting program table and designate the selected broadcasting program. In response, the EPG server 44 transmits the designated broadcasting program to the video recording/reproducing apparatus 71 installed in a household via the public telephone circuit 46. At the same time, the EPG server 44 receives client's information related to the user (who has made a phone call) from the terminal control server 43B operating the client's information base 42, and then reads connection information (i.e., telephone number) of the corresponding video recording/reproducing apparatus 71 from its own client's information file 45 before connecting the public telephone circuit 46 thereto. By implementing the above processes, it is possible to secure recording schedule of a desired broadcasting program by enabling the portable telephone 12 to remotely control the video recording/reproducing apparatus 71 installed in a household via the above arrangement.

In order to enable the portable telephone 12 to properly select and designate any desired broadcasting program, the user simply depresses a functional key such as a scheduling button provided for the portable telephone 12 to enable a specific scheduling code corresponding to the depressed key to be transmitted. Alternatively, the user may select a specific function from display contents of the portable telephone 12. If the user depresses a wrong functional key, he will be notified of an erroneous scheduling via response from the above servers. After receiving a proper scheduling code, the terminal control server 43 transmits the client's data and a predetermined broadcasting program code relevant to the designated broadcasting program to the EPG server 44. In response, the EPG server 44 reads relevant connection information (i.e., telephone number) to be linked with the client's video recording/reproducing apparatus 71 from the client's codes stored in the client's information unit 45 and then executes connection to the public telephone circuit 46. After confirming proper connection to the telephone circuit 46, the EPG server 44 transmits the recording scheduling information to the client's video recording/reproducing apparatus 71. The recording schedule information is transmitted in conformity with a specific format previously defined between the EPG server 44 and the corresponding video recording/reproducing apparatus 71. On receipt of the recording schedule information, the video recording/reproducing apparatus 71 set a recording schedule of the specified broadcasting program, and then, when the scheduled time is reached, the video recording/reproducing apparatus 71 automatically receives and records the scheduled broadcasting program. As described above, by way of scheduling a broadcasting program based on the scheduling code, the user is prevented from incorrectly depressing a scheduling key otherwise likely to be caused by direct setting of a scheduling code while operating a conventional remote controller provided for an individual video recording/reproducing apparatus.

By virtue of the above arrangement, user is enabled to browse a broadcasting program table by way of utilizing a portable-type telephone which is actually a portable-type information communication terminal apparatus, and yet, he can secure a recording schedule via its own display screen, thus leading to the improved operating performance. Further, since it is possible to provide broadcasting program information as part of comprehensive services of a portable-type telephone, it is possible to jointly implement control of clients and charging of service fee. This in turn totally dispenses with construction of such a complex system otherwise needed for implementing control of clients and charging of service fee, thus making it possible to build up an efficient operating system.

Accordingly, a recording schedule reservation system for reserving a recording schedule of a broadcasting program through a network is provided, having an enhanced operating capability by enabling recording of a broadcasting program to be scheduled for a video recording/reproducing apparatus such as a home video recorder by utilizing an externally portable telephone or the like, and the system comprises: a program information server connected to a network, having broadcasting program information and client's information; a video recording/reproducing apparatus having a function to access the program information server to reserve a recording schedule of a predetermined program; and a information terminal apparatus which accesses the program information server to browse broadcasting program information and is capable of selecting any desired broadcasting program, in which the program information server enables the video recording/reproducing apparatus to reserve the recording schedule of the selected broadcasting program selected by the data communicating terminal apparatus.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A recording schedule reservation system for programming a recording schedule of a broadcast program through a network, comprising:
a program information server connected to a network, having broadcast program information and client information accumulated therein;
a video recording/reproducing apparatus connected to the network for accessing said program information server to reserve a recording schedule of a broadcasting program; and
an information terminal apparatus for accessing said program information server to read the broadcast program information so as to select a desired broadcasting program, wherein:
said program information server delivers broadcast program information of the selected broadcast program to the video recording/reproducing apparatus.

2. The recording schedule reservation system according to Claim 1, wherein said information terminal apparatus is a portable-type information terminal apparatus.

3. The recording schedule reservation system according to Claim 2, wherein said portable-type information terminal apparatus is a portable-type telephone.

4. The recording schedule reservation system according to Claim 1, wherein said broadcasting program information includes: a channel number and/or starting time of a broadcasting program and/or ending time of the broadcasting program and/or actual duration of the broadcasting program and/or a video recording mode and/or a title of the broadcasting program.

5. The recording schedule reservation system according to Claim 1, wherein said information terminal apparatus capable of accessing said program information server enables said program information server to execute authentication of individuals.

6. The recording schedule reservation system according to Claim 1, wherein said program information server to be accessed by said information terminal apparatus executes individual authentication and charges individuals for payment of service fee.

7. The recording schedule reservation system according to Claim 1, wherein said video recording/reproducing apparatus programs a recording schedule based on the broadcasting program information delivered by said program information server.

8. The network program recording reservation system according to Claim 1, wherein said program information server comprises a information/control server to be accessed by said information communication terminal and a broadcasting program server to be accessed by said video recording/reproducing apparatus, wherein said information/control server and said broadcasting program server discretely operate on the network.

9. The recording schedule reservation system according to Claim 8, wherein said broadcasting program server is an electronic program guide (EPG) server.

10. The recording schedule reservation system according to Claim 8, wherein:
said information/control server accumulates broadcasting program information of the broadcasting program selected by said information terminal apparatus, and
said information terminal apparatus is capable of checking the recording schedule from the broadcasting program information accumulated in said information/control server.

11. The recording schedule reservation system according to Claim 10, wherein, if a recording schedule of a specific broadcasting program is erroneously input, then, said information/control server responds to said information terminal apparatus by way of informing said information terminal apparatus of the erroneously established recording schedule of the broadcasting program.

12. The recording schedule reservation system according to Claim 10, wherein said information terminal apparatus is capable of checking a recorded broadcasting program from the broadcasting program information accumulated in said information/control server.

13. The recording schedule reservation system according to Claim 8, wherein:
when said information terminal apparatus selects the broadcasting program by accessing said information/control server, said information/control server accesses said broadcasting program server to set the recording schedule of the selected broadcasting program;
when the recording schedule of the selected broadcasting program is set, said broadcasting program server transmits the broadcasting program information of the broadcasting program set by said information/control server to said video recording/reproducing apparatus; and
when said video recording/reproducing apparatus receives the broadcasting program information, said video recording/reproducing apparatus reserves the recording schedule of the selected broadcasting program.

14. The recording schedule reservation system according to Claim 1, wherein, whenever an improvement and/or any change is effected for broadcasting program information service in said program information server, an exactly identical improvement and/or change is applied to said information terminal apparatus and said video recording/reproducing apparatus via the network.
